# EUROPEAN PATENT SPECIFICATION

(11) **EP 0 636 773 B1**
(45) Date of publication and mention of the grant of the patent: **04.11.1998**
(21) Application number: 94111643.6
(22) Date of filing: 26.07.1994
(51) Int. Cl.: F02B 19/16

(54) **A two-stroke cycle internal combustion engine**
Eine Zweitaktbrennkraftmaschine
Un moteur à combustion interne du type à deux temps

(30) Priority: 26.07.1993 JP 184054/93
(43) Date of publication of application: 01.02.1995
(73) Proprietor: YAMAHA HATSUDOKI KABUSHIKI KAISHA, Iwata-shi Shizuoka-ken, 438 (JP)
(72) Inventor: Hirano, Masahiko, Iwata-shi, Shizuoka-ken 438 (JP)
(74) Representative: Grünecker, Kinkeldey, Stockmair & Schwanhäusser Anwaltssozietät

(56) References cited:
- DE-A- 2 642 056
- DE-C- 872 686
- GB-A- 371 025
- GB-A- 373 647
- GB-A- 442 340
- GB-A- 444 879
- GB-A- 677 020
- GB-A- 821 693
- GB-A- 1 046 104
- US-A- 2 011 048

## Description

This invention relates to a two-stroke cycle internal combustion engine comprising a cylinder block with at least one cylinder bore having at least one exhaust passage and at least one scavenging port opposite to the exhaust passage for each cylinder formed through the upper portion of the cylinder block, a cylinder head comprising a first portion having a sealing surface adapted to sealingly engage the associated cylinder block around the cylinder bore to form at least in part a combustion chamber defined by a cylinder head combustion chamber surface surrounded by said sealing surface, said combustion chamber surface of said cylinder head being formed with a recess, an insert piece received at least in part within said recess and affixed to said cylinder head, said insert piece forming at least in part a prechamber, and means defining a throat portion, communicating said prechamber with said combustion chamber.

It is well known that in certain types of engines it is desirable to provide a sub or precombustion chamber in which combustion is initiated before combustion begins in the main combustion chamber. Once combustion is initiated in the prechamber, the burning gases exit into the main chamber through a throat and ensure complete burning in the main chamber. This type of construction is frequently employed in diesel engines wherein the fuel is injected into the prechamber and initiates burning there and then emanates into the main chamber for continued combustion.

With this type of arrangement, it is generally the practice to form the prechamber at least in part from an insert piece that is affixed to the remainder of the cylinder head. Normally the cylinder head is formed from a lighter weight more heat conductive material than the insert piece. The insert piece, because it must be subjected to the higher temperatures and pressures in the prechamber, is normally formed from a more heat resistant material, such as a steel like SUH 3. With the normal attachment methods, the heat resistant insert is in direct contact over a substantial area with the remaining cylinder head material.

It is, however, desirable to ensure that the prechamber surfaces are maintained at a relatively high temperature so as to ensure good initiation of combustion. However, since the insert piece is in direct heat engaging relationship with the remainder of the cylinder head which, as has been noted, has a high thermal conductivity, then the insert piece will be rapidly cooled between ignition cycles, and it is difficult to maintain the desired temperature in the prechamber.

As has been previously noted, it is the common practice to provide a throat section that interconnects the prechamber with the main combustion chamber. It has been found that the shape of this throat and its configuration has a large effect on the combustion performance. One feature which has particular importance is the relationship of the throat opening to the associated head of the piston and the surrounding combustion chamber.

It has heretofore been the practice to insert the insert piece into the cylinder head in such a way that the outer surface of the cylinder head which forms the combustion chamber and the corresponding surface of the insert piece are flush with each other. In fact, at times, a machining operation is performed so as to ensure this flush surface. However, by providing a flush surface, the communication between the throat and the combustion chamber is relatively fixed. In some instances, it may be desirable to provide a narrower clearance between the end of the throat and the head of the piston. In other instances, it may be desirable to recess the end of the throat in a recess formed in the cylinder head surface so as to promote turbulence.

Moreover, GB-A-371 025 (D1) discloses a cylinder head for an internal combustion engine, said head comprising a first portion having a sealing surface sealingly engaging an associated cylinder block around a cylinder bore to form at least in part a combustion chamber defined by a cylinder head combustion chamber surface surrounded by said sealing surface, said combustion chamber surface of said cylinder head being formed with a recess, an insert piece received at least in part within said recess and affixed to said cylinder head, said insert piece forming at least in part a prechamber, means defining a throat portion communicating said prechamber with said combustion chamber and whereby said insert is insulated from said cylinder head first portion for reducing heat transfer therebetween. However, the disclosed internal combustion engine is not a two-stroke cycle internal combustion engine.

Accordingly, it is an objective of the present invention to provide an improved two-stroke cycle internal combustion engine as indicated above wherein the temperature of the prechamber may be maintained even though the surrounding cylinder head material is highly heat conductive.

According to the present invention, this objective is solved for a two-stroke cycle internal combustion engine as indicated above in that heat insulating means are provided for insulating said insert piece from said cylinder head first portion for reducing heat transfer therebetween, and in that said insert piece is situated offset towards the side of the cylinder bore away from the opposite scavenging port and above the exhaust passage (18) as seen along a line parallel to the cylinder axis.

Preferably the heat conductivity of the material of the insert piece is lower than that of the material of the surrounding cylinder head portion.

According to this and other preferred embodiments of the present invention the means for insulating the insert piece comprises an air gap formed at least in part between said insert piece and the surrounding cylinder head portion.

According to yet another preferred embodiment of the present invention considering the flow conditions from the prechamber to the main combustion chamber through a throat portion it is provided for an end surface of the insert piece onto which the throat portion opens, to be spaced from the adjacent surrounding surface of the combustion chamber surface of the cylinder head portion so as to be positioned at a different distance from the head of an associated piston in the cylinder bore than the surrounding cylinder head surface surrounding the combustion chamber surface. Other preferred embodiments of the present invention are let down in the further subclaims.

In the following the present invention is explained in greater detail by means of several embodiments thereof in conjunction with the accompanying drawings wherein:
Figure 1 is a front elevational view of an automotive diesel engine constructed in accordance with an embodiment of the invention;
Figure 2 is a top plan view of the engine;
Figure 3 is a cross-sectional view taken along a plane perpendicular to the crankshaft and generally along the line 3-3 of Figure 4;
Figure 4 is a side elevational view, on a scale reduced from that of Figure 3, with a portion of the engine broken away and shown in section;
Figure 5 is a cross-sectional view taken along the line 5-5 of Figure 3;
Figure 6 is a cross-sectional view taken along the line 6-6 of Figure 3;
Figure 7 is an enlarged cross-sectional view taken along the line 7-7 of Figure 4;
Figure 8 is a further enlarged cross-sectional view taken along a plane parallel to the plane of Figure 3 and shows in more detail the way in which the precombustion chamber is formed;
Figure 9 is a cross-sectional view taken along the line 9-9 of Figure 8;
Figure 10 is a side elevational view of a piston not covered by the claims;
Figure 11 is a cross-sectional view of the piston shown in Figure 10 and taken along a plane perpendicular to the plane of Figure 10;
Figure 12 is a side elevational view, of the piston looking at the side opposite that shown in Figure 10;
Figure 13 is a cross-sectional view of the piston shown in Figure 12, in part similar to Figure 11, and taken along a plane perpendicular to the plane of Figure 12;
Figure 14 is an enlarged cross-sectional view taken through one of the crankshaft bearings of the engine and showing the manner of lubrication, which is not covered by the claims;
Figure 15 is an enlarged cross-sectional view, in part similar to Figure 8, and shows another embodiment of the invention;
Figure 16 is a cross-sectional view taken along the line 16-16 of Figure 15;
Figure 17 is a cross-sectional view, in part similar to Figures 8 and 15, and shows another embodiment of the invention;
Figure 18 is a cross-sectional view, in part similar to Figures 8, 15 and 17, and shows a yet further embodiment of the invention.

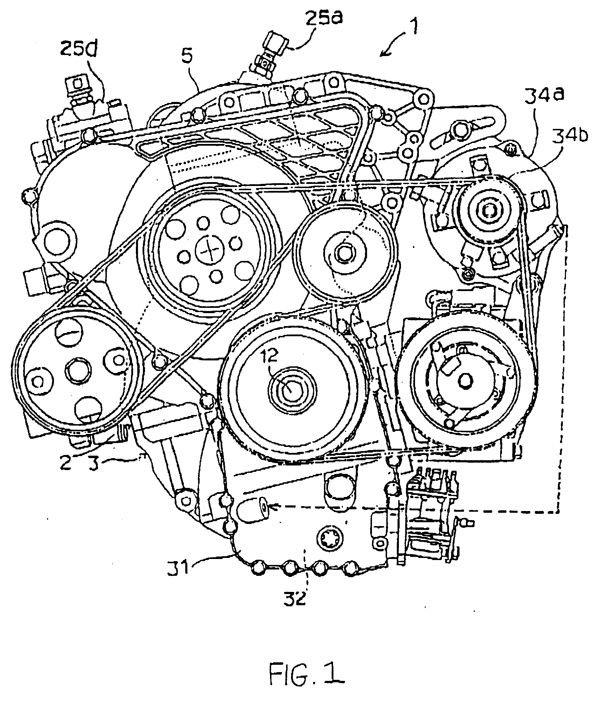

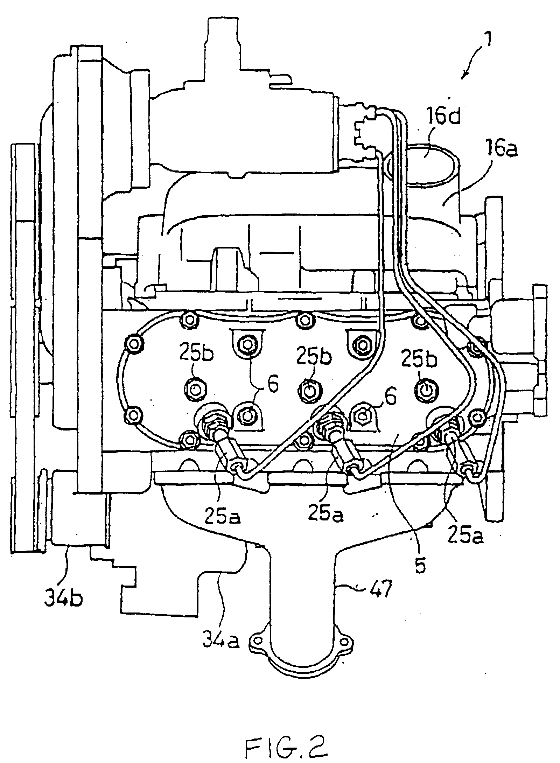

Referring now in detail to the drawings and initially to the embodiment of Figures 1-4, an internal combustion engine constructed in accordance with an embodiment of the invention is identified generally by the reference numeral 1. The engine 1 is depicted as being of a three cylinder in-line type but will be readily apparent to those skilled in the art how the invention can be practiced with engines having other cylinder numbers and other cylinder configurations. In the illustrated embodiment, the engine 1 operates on a two-cycle crankcase compression diesel principle. Again, however, it will be readily apparent to those skilled in the art how the invention can be employed with engines operating with different combustion techniques (diesel or spark ignition). However, the invention has particular utility in conjunction with two-cycle engines having precombustion chambers such as diesel engines.

The engine 1 includes a cylinder block assembly 2 which, as has been noted, has an in-line configuration in the illustrated embodiment. The cylinder block 2 is disposed so that it is inclined from the vertical and in a forward direction as shown in Figure 1. This orientation is particularly advantageous when employed in conjunction with a front engine motor vehicle having a transverse engine orientation wherein the cylinder block 2 will be inclined slightly forwardly.

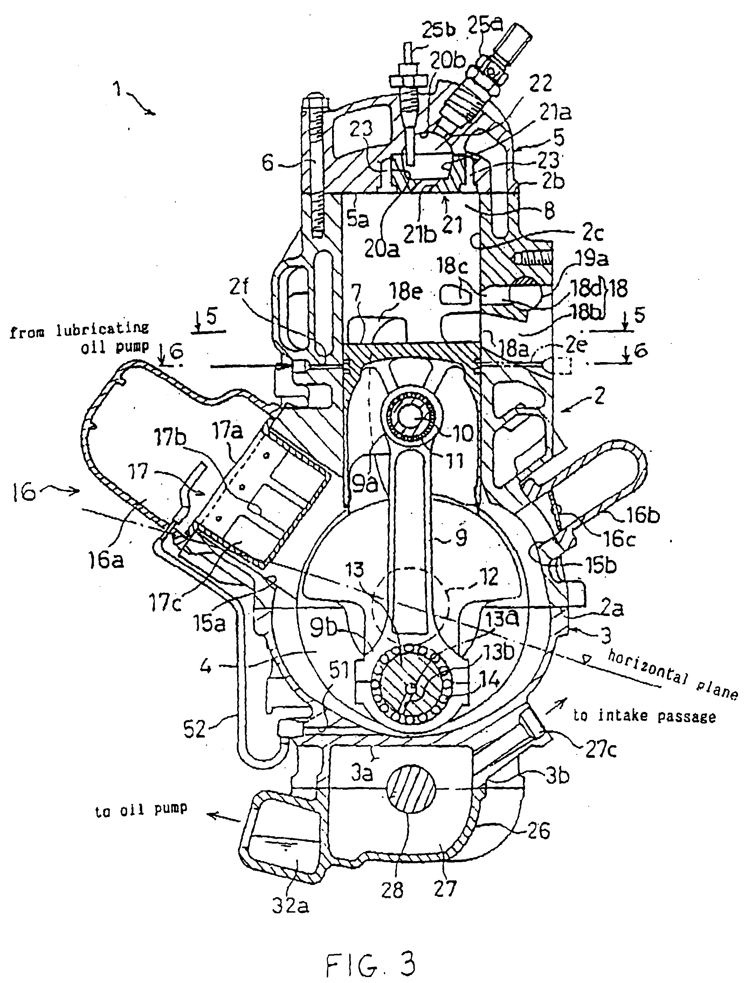

Referring now in detail primarily to Figure 3, the cylinder block 2 is formed from a light alloy material such as aluminum and is provided with cylinder bores 2c which may be formed by liners (not shown). The cylinder bores 2c all have their axes aligned in a common plane which is, as has been noted, inclined to the vertical in the forward direction when viewing the engine compartment transversely. A cylinder head assembly 5 is affixed in a suitable manner to the cylinder block 2 at its upper end. A crankcase member, indicated generally by the reference number 3, is affixed to a skirt portion at the lower end of the cylinder block 2.

An intake air charge is delivered to a plurality of crankcase chambers 4 through an induction system, indicated generally by the reference numeral 16. This induction system includes an intake manifold 16a that draws an air charge through an air inlet device (not shown) and which delivers it to each of a plurality of intake passages 15a formed at the lower end of the cylinder block 2 and which communicate with the crankcase chambers 4. The cylinder block 2 has three sets of intake passages 15a formed through the lower portion thereof, each for communication with a crank chamber 4. The intake manifold 16a is thus common to all of the cylinders. Each crank chamber 4 communicates with the intake manifold 16a through a return hole 51 opening to the bottom of each crank chamber and leading to a hose 52. This return path ensures that the lubricating oil accumulated in the crank chamber 4 may be returned into the intake manifold 16a. Reed type valve assemblies 17 are provided in the intake passages 15a so as to permit the flcw of the intake charge into the crankcase chambers 4 when the pistons 7 are moving upwardly in the cylinder bores 2c and for precluding reverse flow when the pistons are moving downwardly so as to compress the charge in the crankcase chambers. Each reed valve 17 comprises a valve cage 17a having openings 17b alternately opened and closed by valve plates 17c. The lubricating oil path through the hole 51 and hose 52 thus terminates at a location proximate the valve plates 17c to provide lubrication as a sound dampening medium.

The charge which is drawn into the crankcase chambers 4 and compress therein is then transferred to a main combustion chamber, indicated generally by the reference numeral 8 and formed by the cylinder bore 2c, piston 7, and by a cylinder head assembly 5 that is affixed to the cylinder block 2 with bolts 6, for example. The skirt portion of the cylinder block 2 which forms the upper portion of the crankcase chamber 4 is formed with three individual openings 15b, one for each crankcase chamber. A balance passage forming manifold 16b is affixed to the cylinder block 2 via threaded fasteners (not shown) through abutting flanges. The manifold 16b defines a longitudinally extending balance passage and a scavenging control valve 16c is disposed between each individual opening 15b and the common balance passage 16b. When the scavenging control valve 16c is opened, the crank chamber 4 connected with the particular opening 15b is in communication with the balance passage 16b, substantially enlarging the crank chamber volume and lowering the scavenging flow. In this manner, inner EGR gas increases and the combustion temperature drops. When the scavenging control valve 16c is closed, the crank chamber volume returns to normal.

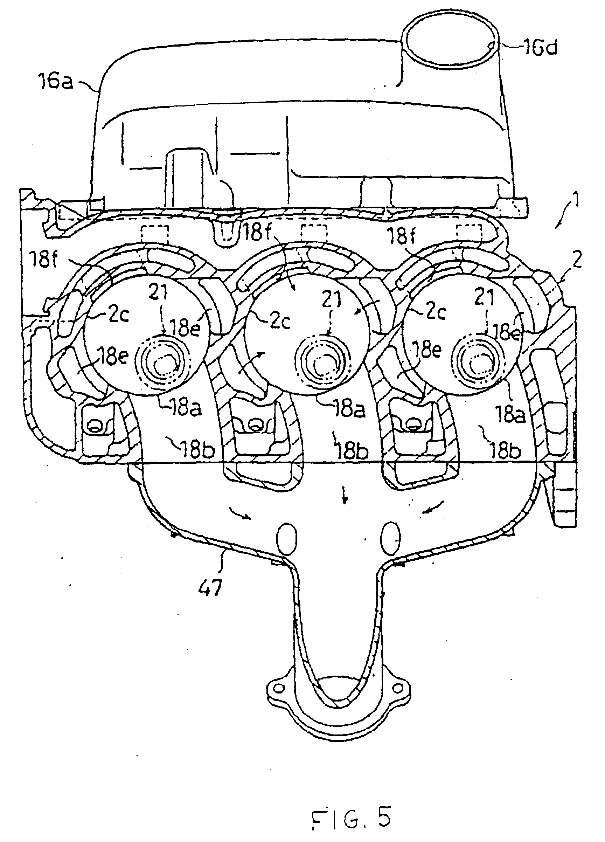

As seen in Figs. 3 and 5, a set of exhaust passages 18 for each cylinder are formed through the upper portion of the cylinder block 2. The exhaust passages 18 are comprised of a main exhaust passage 18b between the main exhaust port 18a and a cylinder outer connecting port. A subexhaust passage 18d leads to a pair of subexhaust ports 18c opened above the main exhaust port 18a. The exhaust passages 18b and 18d join at a mid-portion through the cylinder block 2. Each subexhaust passage 18d is opened or closed under control by an exhaust control system 19. The control system 19 is used for varying the exhaust timing and the compression ratio, and is inserted and disposed to cross the subexhaust passage 18d.

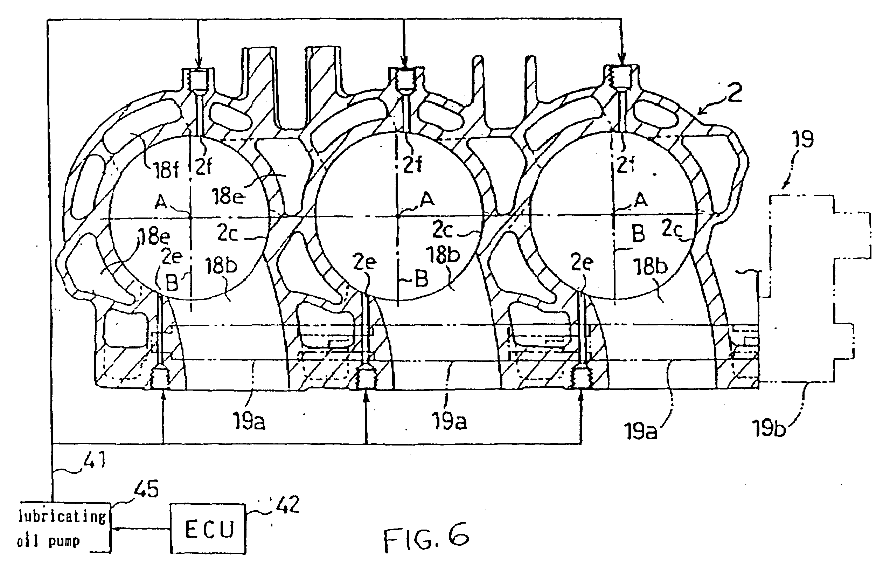

The control system 19 is provided with three exhaust control valve bodies 19a across each sub-exhaust passage 18d and a driving mechanism 19b for opening and closing the valve bodies. Each exhaust control valve 19a comprises a round bar having an arcuate valve portion formed thereon. The control valves are connected with each other through engaging portions, as schematically indicated in Figure 6. The driving mechanism 19b includes a driving shaft connected to an outer end of the exhaust control valve bodies 19a, and a driving motor is connected to the driving shaft through a gear train.

A pair of side main scavenging ports 18e are formed on both sides of the main exhaust port 18a. Further, an opposite center scavenging port 18f is formed opposite to the main exhaust port 18a. The three scavenging ports 18e and 18f communicate with each crank chamber 4 for the particular cylinder. The various exhaust ports and exhaust passages may be more clearly seen in Figure 5. As the piston 7 is driven downwardly, eventually the various exhaust ports formed in the cylinder block and communicating with the exhaust passages will open and the exhaust gases can be discharged to the atmosphere to an exhaust manifold 47.

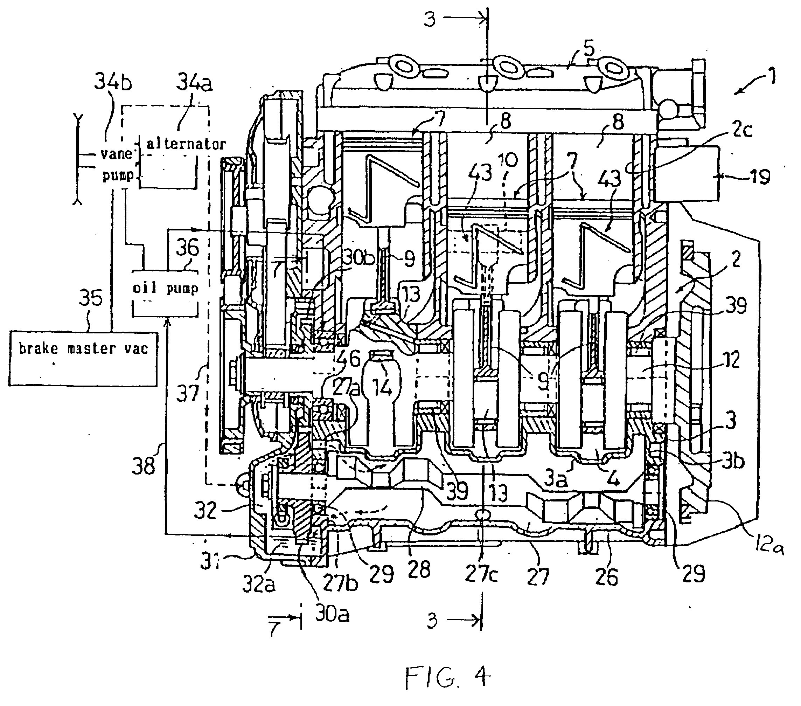

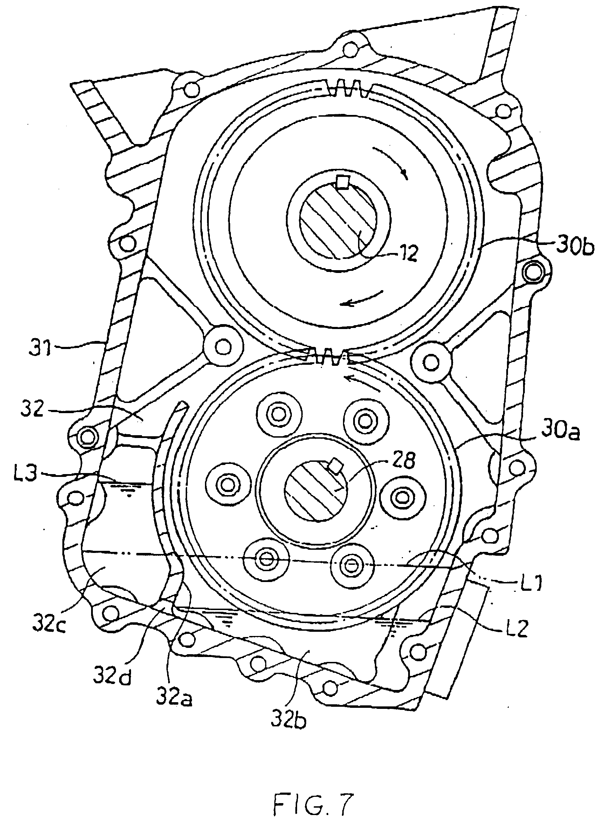

Now with reference to Figures 3 and 4, a balancer shaft, indicated generally by the reference number 28, is rotatably journalled within a balancer shaft chamber 27 formed beneath the crankcase chambers 4 and defined by the crankcase member 3b and a cover member 26 which is affixed thereto. The balancer shaft 28 is rotatably journalled in a pair of spaced apart bearings 29 and rotates about an axis that is parallel to the axis of the crankshaft 12, and at the same speed but in the opposite direction, as best seen in Fig. 7. Due to the fact that the engine 1 is a two-cycle, crankcase compression type, it is possible to put the balancer shaft 28 substantially beneath the crankshaft 12 without adding significantly to the height of the engine. This is because the engine 1 does not require a crankcase which holds a volume of lubricant, as is true with conventional 4-stroke engines.

With specific reference to Figures 4 and 7, the balancer shaft 28 is driven from the crankshaft 12 so as to rotate at crankshaft speed but in an opposite direction. The transmission includes a driving gear 30b that is affixed to the end of the crankshaft 12 opposite to the flywheel 12a and which is in meshing engagement with a driven gear 30a keyed to the balancer shaft 28. The balancer shaft 28 has formed integrally therewith three eccentric masses, one for each cylinder 2c of the associated engine. As is well known, the rotation of the eccentric masses will cause the balancing of certain forces on the engine.

The gears 30a and 30b are located in a gear chamber 32 formed by the end surfaces of the cylinder block 2, crankcase 3 and balancer cover 26, along with a gear cover 31. The gear chamber 32 communicates with the balancer chamber 27 through upper and lower communication holes 27a and 27b, respectively, as seen in Figure 4. Figure 7 illustrates the gear chamber 32 having first and second oil reservoire 32b and 32c, respectively, with the first oil reservoir being larger than the second. A curvilinear wall or partition 32a is formed adjacent the driven gear 30a and across the gear chamber 32 along the balancer shaft 28 axis. The first and second oil reservoirs 32b, 32c communicate with each other by gravity through a restricted communication passage 32d formed through the lower edge of the partitioned wall 32a.

With the engine stopped, the lubricating oil level is L1 in both first and second oil reservoirs 32b, 32c. During engine 1 operation, the oil levels in the first and second oil reservoirs 32b, 32c become L2 and L3, respectively. This is due to lubricating oil being thrown to the outside regions of the gear chamber 32 during the spinning operation of the gears 30a and 30b. The lubrication in the second oil reservoir 32c will gradually seep back into the first oil reservoir 32b due to the restriction passage 32d. The end result is that the gear 30a is substantially immersed in lubrication at the time of startup of the engine 1 (corresponding to lubrication level L1), while in operation, the oil level within the first oil reservoir 32b reduces to L2 which reduces the contact between the driven gear 30a and the lubricant. Thus, there is less frictional temperature rise of the lubricating oil and less drag resistance to rotation of the gear 30a. Further, because of the reduced level L2 of lubricant within the first oil reservoir 32b during operation the problem of the lubricant "frothing" from frictional contact with the driven gear 30a is reduced.

Another benefit of this sump arrangement is that a majority of the lubricating oil is present in the second oil reservoir 32c during operation of the engine 1. The lubricant is thus in intimate contact with an exterior surface of the gear cover 31 and crankcase 3, which increases heat dissipation therethrough and more effectively cools the temperature of the lubricant.

Because the engine 1 in a preferred embodiment is a two-cycle, diesel engine, the negative intake pressure for the brake booster vacuum motor 35 is often insufficient. Still with reference to Figs. 4 and 7, the engine 1 is provided with a negative pressure producing vane pump or air compressor 34b coaxial with an alternator 34a which is driven by the crankshaft 2. Lubricating oil is supplied to the air compressor 34b via an oil pump 36. The supply of lubricating oil is drawn through an oil passage 38 from the gear chamber 32. Subsequently, the output air and lubricant mixture from the air compressor 34b is then channeled back to an upper region of the gear chamber 32 through a mixture passage 37. A majority of the oil discharged with the air from the air compressor 34b then condenses and joins with the oil in the first and second oil reservoirs 32b and 32c. The vaporous mixture still having lubricant remaining therein flows into the balancer chamber 27 through the upper communication passage 27a. Most of the remaining lubricating oil then condenses and is separated and returns to the oil reservoirs 32b, 32c via the lower communication passage 27b. The air, substantially separated of lubricating oil, is then supplied from an air discharge port 27c (Fig. 3) into the intake manifold 16a through a breather hose (not shown). The balancer 27 thus functions as a breather chamber for separating the oil and air mixture output from the air compressor 34b.

As mentioned, the cylinder block 2 has three cylinder bores 2c formed in parallel, and each cylinder bore has a piston 7 which can reciprocate therein. The piston is connected to a small end 9a of a connecting rod 9 through a piston pin 10 and needle bearing 11, while the large end 9b of the connecting rod is connected to the crank pin or throw 13 of the crankshaft 12 through a needle bearing 14. As seen in Figure 4, the crankshaft 12 is journalled by bearings 46 and 39 within the crankcase 3.

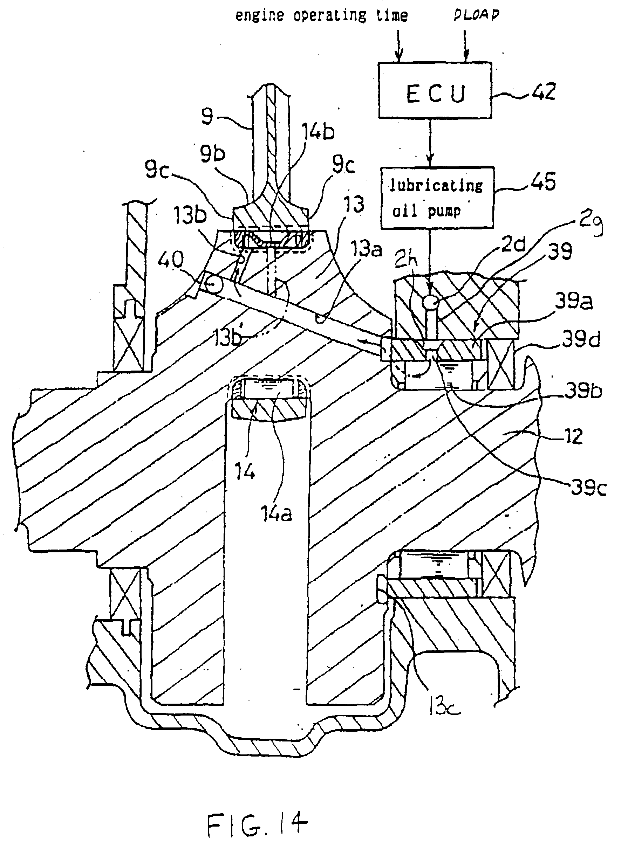

There is provided an arrangement for lubricating the connecting rod journals 14 immediately upon startup of the engine 1. More particularly, the engine 1 is provided with a separate lubricating system that includes a source of lubricant and lubricating pump 45 that delivers lubricant to various components of the engine. This includes an arrangement for lubricating the main bearing 39 and also the connecting rod bearing 14, which will be described below with reference to Figures 4 and 14. An ECU 42 controls the operation of the lubricating oil pump 45 by supplying a driving signal to the pump to provide the required amount of oil determined from engine parameters such as operating time, engine load, etc. The pump 45 may be driven under the control of the ECU 42 in any known manner.

With specific reference to the detailed view of Figure 14, each bearing 39 journalling the crankshaft 12 between adjacent cylinders 2c comprises a roller bearing assembly 39b within an outer race 39a. Fully independent crank chambers 4 are provided for each of the cylinders 2c within the lower portion of the cylinder block 2 and crankcase 3. As is well known in this art, the crankcase chambers 4 associated with each of the cylinder bores 2c are sealed from each other so as to facilitate the two-cycle crankcase compression operation of the engine 1. In the illustrated embodiment, a sealing member 39d prevents communication between adjacent crank chambers 4. A main oil gallery 2d is formed in the crankcase 3 and receives lubricant under pressure. A plurality of delivery passages 2g intersect the gallery 2d and deliver oil to an oil delivery opening 2h in the bearing outer race 39a. This lubricant then flows and lubricates the rollers of the bearing 39. Lubricant which escapes from the bearing 39 will be directed by the seal 39d inwardly and will flow into an oil retaining groove 13c in the crank pin 13.

A cross-drilled passageway 13a extends through the throw 13 and is closed at its opposite end by a plug 40. Oil will be drawn from the retaining groove 13c and transferred by centrifugal force into the cross-drilled passageway 13a. A delivery passage 13b intersects the first passageway 13a and the bearing 14 so as to lubricate this bearing. Hence, excess lubricant will be delivered to the bearing 14. The delivery passage 13b is branched at a location close to the plug 40, and extends obliquely with respect to the axis of the connecting rod 9 thus minimizing the amount of lubricant which must be accumulated in the passage 13a before the centrifugal force causes flow into the passage 13b, unlike the prior art type of construction. This arrangement ensures that lubricating oil supplied from the pump 45 to the bearing 39 is forced to flow to the journal 14 directly after startup of the engine 1 due to the minimal dead volume of the first passageway 13a between the opening of the second passageway 13b and the plug 40. The plug 40 may comprise a ball. Figure 14 also shows a conventional branch passage 13b' in dashed lines which extends proximate the longitudinal center of the throw 13, i.e., from a position distant from the plug 40 and extends generally parallel with the axis of the connecting rod 9 and thus the passage 13a has a dead space which must be filled with lubricant before lubricant will flow into passage 13b'.

With reference now to Figures 3, and 6, the cylinder block 2 has a pair of transverse oil passages 2e and 2f formed therethrough for each cylinder to supplying lubricating oil to the sliding surfaces of the piston 7. These oil passages 2e, 2f penetrate the cylinder block 2 perpendicularly to the crankshaft 12 and are rotationally displaced around the cylinder axis A. The oil passages 2e and 2f terminate at the cylinder bore 2c between the piston rings of the piston 7 when the position of the piston is at bottom dead center, shown in Figure 3, and register with the skirt of the pistons 7 during substantially its full stroke. These oil passages 2e and 2f are connected to the lubricating oil pump 45 through oil supplying passages 41.

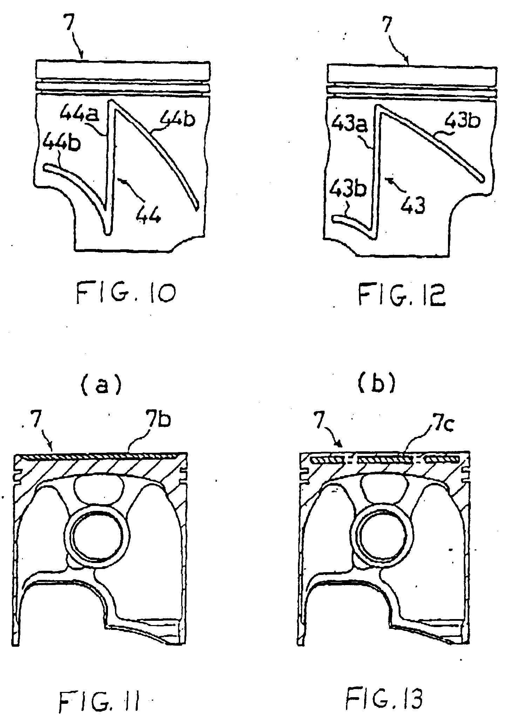

Now with reference to Figures 10 and 12, each piston 7 has a pair of oil distributing grooves 43, 44 formed in the skirt portion to uniformly spread oil supplied from the oil passages 2e and 2f over the piston skirt sliding surfaces. These distributing grooves 43, 44 comprise axially disposed grooves 43a and 44a offset circumferentially around each piston 7 so as to remain in register with the oil passages 2e and 2f in the cylinder bore 2c. Obliquely disposed generally circumferential grooves 43b and 44b extend from the upper and lower ends of the axial grooves 43a and 44a. These circumferential grooves 43b, 44b extend generally perpendicularly to the axis of the piston 7 and ensure that lubricant is delivered substantially around the entire circumference of the piston skirt. In a preferred form, the oblique grooves 43b, 44b extend from opposite ends of the axially disposed grooves 43a, 44a in directions around the circumference of the piston 7 which are inclined relative to the axis A of the cylinder bores 2c. Furthermore, the oblique grooves 43b, 44b preferably extend from each axial groove 43a, 44a in opposed directions around the piston circumference but are inclined relative to the piston axis A toward each other. Because of this orientation, the reciprocation of the piston 7 will cause lubricant to be distributed along the full circumferential extent of the grooves 43a and 43b.

The provision of the axial grooves 43a and 44a, and oblique grooves 43b and 44b, ensures the skirt sliding surfaces of each piston 7 can be lubricated around their circumferences with a smaller number of oiled holes in each cylinder bore 2c wall. Further, because oil remains in the grooves 43, 44 even when the engine is out of operation for long periods, lubrication can be resumed instantly after restarting the engine.

The reader's attention is now directed to Figures 3, 8 and 9 for discussion of an improved precombustion chamber insert.

The cylinder head assembly 5 is comprised of a main cylinder head casting member which may be formed from a lightweight, highly heat conductive material such as aluminum or an aluminum alloy. The cylinder head 5 has a lower surface that is in sealing relationship with the cylinder block 2 around the cylinder bores 2c. A cylinder head gasket (not shown) may be interposed between the cylinder head surface and cylinder block 2 for sealing purposes, as is well known in this art. Threaded fasteners 6 affix the cylinder head members 5 to the cylinder block 2, as mentioned above. A cylinder head surface 5a forms with the cylinder bore 2c and heads of the pistons 7, the main combustion chambers 8 previously referred to.

A precombustion chamber 22 is formed in the cylinder head assembly 5 in a manner now to be described. This precombustion chamber 22 is offset to cne side of the cylinder bore 2c from the center of the cylinder bore 2c. According to the invention, this offset is toward the side of the cylinder bore away from the opposite scavenging ports 18f. This precombustion chamber 22 is formed by a spherical segment 20b integral with the cylinder head member 5 and at the base of a counterbore 20a.

An insert piece, indicated generally by the reference numeral 21, is positioned within this counterbore 20a and affixed therein in a manner to be described. The insert piece 21 is formed preferably from a heat resistant steel, for example a steel designated as SUH 3 according to the Japanese Industrial Standards (JIS). This material has a lower heat conductivity and a lower thermal expansion than the aluminum of the main cylinder head member 5.

The insert piece 21 is formed with a recessed area 21a which has a surface of a segment of a cone with the upper diameter thereof being equal to the spherical diameter of the spherical portion 20b of the main cylinder head member 5. The lower diameter may have any desired shape and thus the insert piece recess 21a and spherical cylinder head section 20b form the precombustion chamber volume 22 previously described.

A transversely extending throat 21b is formed in the lower end of the insert piece 21 and communicates the prechamber volume 22 with the main combustion chamber 8. This throat 21b is directed so that it will terminate substantially at the center of the cylinder bore 2c and direct the charge issuing therefrom downwardly into the cylinder bore toward the opposite scavenge port 18f. The throat 21b is inclined so that hot gases may be directed directly into the inlet of a top surface cavity 7a formed in the piston 7. The bottom surface 21c of the insert piece 21 projects downward from the cylinder head surface 5a by a small distance **a** for a purpose to be described.

A fuel injector 25a is mounted in the cylinder head member 5 and sprays into the prechamber recess 22 and through the throat 21b into the main chamber 8. To assist in the initiation of starting and combustion, a glow plug 25b may be positioned with its tip in the prechamber recess 22.

As the piston 7 approaches the top dead center position, and as the pressure rises in both the prechamber 22 and main chamber 8, fuel injected by the injector 25a, due to the high temperature in the prechamber, will ignite, burn, and expand. This expansion occurs also through the throat 21b so as to fire the charge in the main chamber 8 and complete the combustion and the driving of the piston 7 downwardly. While fuel is injected close to the top dead center point in a compression stroke, the flame blows out of the throat 21b. Because the bottom surface 21c of the insert piece 21 is projected downward into the main combustion chamber 8, the gap between the top surface of the piston 7 and the mating surface of the cylinder head 5 becomes narrower by the distance **a**. Consequently, this projected portion functions as a masking and air is regulated so as to flow into the top surface cavity 7a of the piston 7. Preferably, the projection distance **a** is set between 0.1 and 1.0 mm.

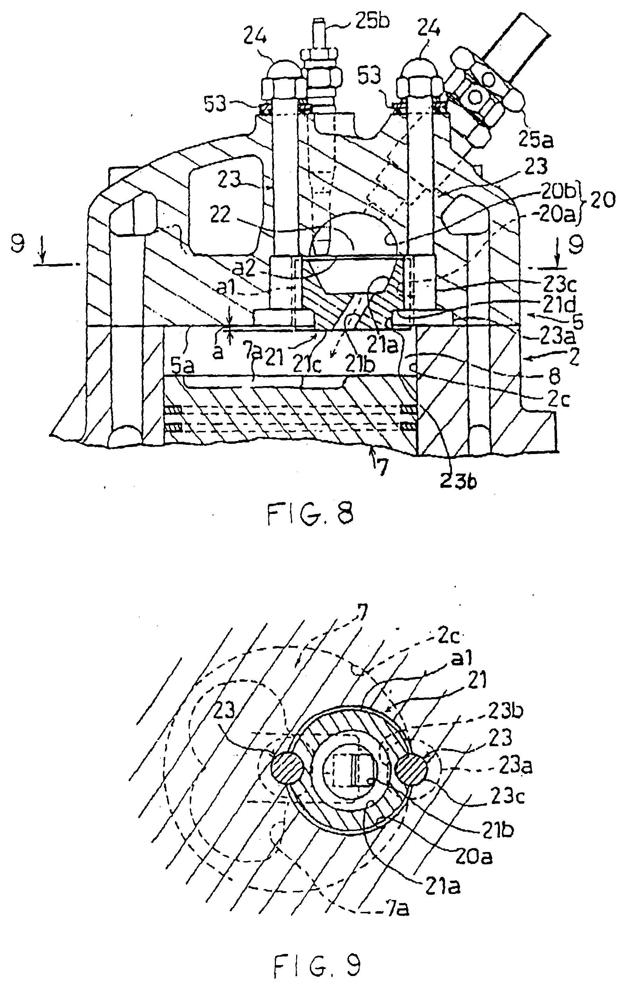

The insert piece 21 is fixed in the counterbore 20a via fixing bolts 23 inserted into the cylinder head 5 of an outward direction from the main combustion chamber side 8. The bolts 23 are secured with cap nuts 24 and sealing gaskets 53 therebetween. Inner flange portions 23a of the bolts 23 support stepped portions 21d of the insert piece 21, while cutout portions 23b in the flange portions prevent rotation of the bolts. Furthermore, the larger diameter portions 23c of the fixing bolts 23 provide contact between the counterbore 20a and the outer wall of the insert piece 21, as best seen in Figure 9. Annular heat insulation gap **a1** and circular heat insulation gap **a2** nearly eliminate conductive heat transfer between the insert piece 21 and the surrounding counterbore 20a and cylinder head 5. The heat insulation gaps **a1** and **a** are preferably approximately .5 and 1.0 mm, respectively. The provision of the heat insulation gaps **a1** and **a2** allow higher temperatures within the precombustion chamber 22 for more efficient ignition and combustion. The downwardly projecting insert piece 21 into the cylinder cavity 8 further increases the efficiency of combustion by directing air from the precombustion chamber into the top cavity 7a of the piston 7. Furthermore, because the insert piece 21 is affixed within the combustion chamber 8 via the fixing bolts 23, the location of the insert piece is not specifically limited.

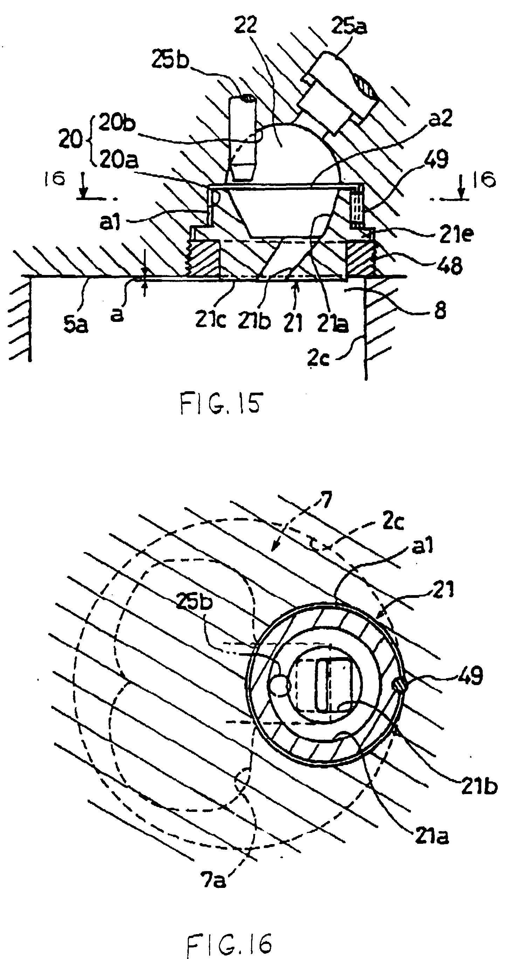

Figures 15-18 describe alternative embodiments for securing the insert piece 21 into the cylinder head 5. More specifically, Figures 15 and 16 illustrate an embodiment in which a flange 21e of the insert piece 21 is supported by screwing a fixing ring 48 having a male thread thereon into a female thread of the counterbore 20a. Again, heat insulation gaps **a1** and **a2** between the insert piece 1 and the cylinder head 5 are provided. Furthermore, the lower surface 21c of the insert piece 21 projects downward from the mating surface of the cylinder head 5 by a distance **a**. A rotation preventing pin 49 is inserted between the outer peripheral surface of the insert piece 21 and the counterbore 20a.

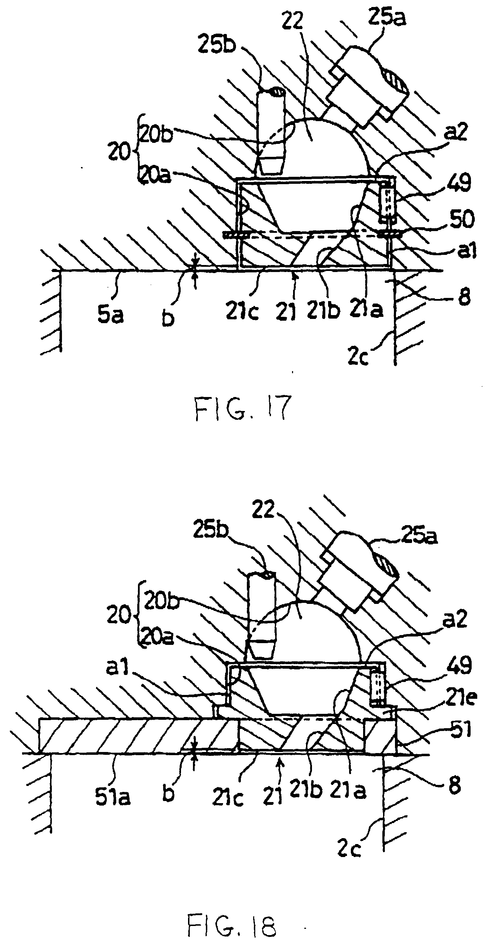

Figure 17 illustrates an embodiment in which the insert piece 21 is fixed in the counterbore 20a via a circlip 50. A rotation preventing pin 49 is also provided. The heat insulation gape **a1** and **a2** between the outer surfaces of the insert piece 21 and the inner surfaces of the cylinder head 5 are again present. In contrast to the previously described embodiments, the bottom surface 21c of the insert piece 21 is recessed upward by a depth b from the mating surface 5a of the cylinder head 5. By this arrangement, fuel injected through the throat 21b blows out into the main combustion chamber 8 and is effectively stirred with the air in the combustion chamber, resulting in a higher air utilization rate in the main combustion chamber.

Figure 18 illustrates an embodiment in which the insert piece 21 is fixed and supported utilizing a fixing plate 51 having a larger diameter than the cylinder bore 2c. Once again, a rotation preventing pin 49 is provided. Also, the heat insulation gaps **a1** and **a2** between the insert piece 21 and the cylinder head 5 are similarly provided. The lower surface 21c of the insert piece 21 is recessed upward by a depth **b** from the mating surface 51a of the fixing plate 51. In this embodiment, there is some contact between the insert piece 21 and the cylinder head 5. Although the heat insulation gaps **a1** and **a2** are provided substantially over the opposing surfaces of the insert piece 21 and cylinder head 5, the insulation gaps need not be provided completely between the two components to obtain a beneficial result. In such a case, the partial contact between the insert piece 21 and cylinder head 5 greatly reduces the heat transmitted therebetween.

All of the embodiments have been described so far with the insert piece 21 being provided in the cylinder head 5 from the main combustion chamber 8 side. Alternatively, the preferred invention can be applied also to configurations in which the cylinder head 5 is divided into upper and lower divisions and the insert piece 21 is inserted from outside into the lower division.

In an alternative to the recess 7a formed in the top of the piston 7, as seen in Figure 8, a ceramic layer 7b having a high heat insulation capability may be sprayed on the top surface of the piston, as seen in Figure 11. Likewise, a layer of ceramic 7c can be cast directly into the piston 7, as seen in Figure 13. With these insulating layers, the temperature of the top of the piston 7 can be lower, allowing the piston rings to be placed nearer the top of the piston. Consequently, the compression ratio can be increased while avoiding ring sticking from excessive temperatures.

It should be readily apparent from the foregoing description that the preferred embodiments of the invention arc very effective in providing a construction whereby the precombustion chamber may be formed and wherein the insert that forms the precombustion chamber is effectively insulated so as to maintain its temperature during engine operation. In addition, the illustrated embodiments permit the distance between the lower surface of the cylinder head insert and the remaining surface of the cylinder head to be varied for changing the flow characteristics from the precombustion chamber to the main combustion chamber through the throat to achieve either a throttling or promote turbulence. Of course, the foregoing description is that of preferred embodiments of the invention and various changes and modifications may be made without departing from the invention, as defined in the appended claims.

## Claims

1. A two-stroke cycle internal combustion engine comprising a cylinder block (2) with at least one cylinder bore (2c) having at least one exhaust passage (18) and at least one scavenging port (18f) opposite to the exhaust passage (18) for each cylinder formed through the upper portion of the cylinder block (2), a cylinder head (5) comprising a first portion having a sealing surface adapted to sealingly engage the associated cylinder block (2) around the cylinder bore (2c) to form at least in part a combustion chamber (8) defined by a cylinder head combustion chamber surface (5a) surrounded by said sealing surface, said combustion chamber surface (5a) of said cylinder head (5) being formed with a recess, an insert piece (21) received at least in part within said recess and affixed to said cylinder head (5), said insert piece (21) forming at least in part a prechamber (22), and means defining a throat portion (21b), communicating said prechamber (22) with said combustion chamber (8), **characterized in that** heat insulating means (al,a2) are provided for insulating said insert piece (21) from said cylinder head first portion for reducing heat transfer therebetween, and in that said insert piece (21) is situated offset towards the side of the cylinder bore (2c) away from the opposite scavenging port (18f) and above the exhaust passage (18) as seen along a line parallel to the cylinder axis.

2. A two-stroke internal combustion engine of claim 1, wherein the cylinder head first portion and the insert piece (21) are formed from different materials.

3. A two-stroke internal combustion engine of claim 2, wherein the cylinder head first portion is formed from a more highly heat conductive material than the insert piece (21) and is provided with means for cooling the said cylinder head first portion.

4. A two-stroke internal combustion engine of claim 1, wherein the means for insulating the insert piece (21) comprises an air gap (a1, a2) formed at least in part between the insert piece (21) and the cylinder head first portion.

5. A two-stroke internal combustion engine of claim 4, wherein the air gap (al,a2) is formed between the outer peripheral portion of the insert piece (21) and at least part of the first portion of the cylinder head (5) that defines the recess.

6. A two-stroke internal combustion engine of claim 4, wherein the air gap (a2) is formed between a base of the insert piece (21) opposite the combustion chamber (8) and a facing surface of the cylinder head first portion that defines the recess.

7. A two-stroke internal combustion engine of claim 1, wherein the throat portion (21b) is formed in the insert piece (21) and extends through a surface of the insert piece (21) that faces a piston (7) slidably received in the cylinder bore (2c) and which faces the combustion chamber (8).

8. A two-stroke internal combustion engine of claim 7, wherein a surface (21c) of the insert piece (21) in which the throat portion (21b) is formed extends in closer proximity to the piston (7) than the surrounding combustion chamber surface (5a) of the cylinder head first portion.

9. A two-stroke internal combustion engine of claim 7, wherein a surface (21c) of the insert piece (21) through which the throat portion (21b) extends is recessed into the recess so that the surface (21c) is spaced further from the piston (7) than the surrounding combustion chamber surface (5a) of the cylinder head first portion.

10. A two-stroke internal combustion engine of claim 4, wherein the recess in the cylinder head first portion is a cylindrical recess and the insert piece (21) has an outer peripheral surface that is cylindrical but of a smaller diameter than the diameter of the recess, said cylindrical portion of said insert piece (21) being defined at one end by a planar surface in which an insert piece recess (21a) is formed and which forms at least in part the precombustion chamber (22) and wherein the cylinder head recess has a surface (20a) facing but spaced from said outer peripheral surface of said insert piece (21) and having a further recess (20b) cooperating with the insert piece recess (21a) for forming the precombustion chamber (22), and means (23a; 48; 50; 51) for affixing the insert piece (21) to the cylinder head (5) in spaced relationship.

11. A two-stroke internal combustion engine of claim 4, wherein the recess in the cylinder head first portion is a stepped cylindrical recess (20a) comprised of a larger diameter portion extending from said combustion chamber surface (5a) and a smaller diameter portion forming a shoulder therebetween and the insert piece (21) has a first outer peripheral surface that is cylindrical but of a smaller diameter than the smaller diameter portion of the recess, said cylindrical portion of said insert piece (21) being defined at one end by a planar surface in which an insert piece recess (21a) is formed and which forms at least in part the precombustion chamber (22) and wherein the cylinder head recess has a surface (20a) facing but spaced from said outer peripheral surface of said insert piece (21) and having a further recess (20b) cooperating with the insert piece recess (21a) for forming the precombustion chamber (22), said insert piece (21) having a shoulder (21e) engaged with said cylinder head recess shoulder, and means (48; 51) for affixing the insert piece (21) to said cylinder head (5).

12. A two-stroke internal combustion engine of claim 11, wherein the means for affixing the insert piece (21) to the cylinder head (5) in a spaced relationship comprises a retaining ring (48) received in the larger diameter portion of the cylinder head recess.

13. A two-stroke internal combustion engine as claimed in at least one of the preceding claims 1 to 12, **characterized in that** said throat portion (21b) extending from said prechamber (22) through an end surface of said insert piece (21) for communicating said prechamber (22) with said combustion chamber (8), said end surface of said insert piece (21) being spaced from the adjacent surrounding surface of the combustion chamber surface of the cylinder head first portion to be positioned at a different distance (a; b) from a head (7a) of an associated piston (7) in the cylinder bore (2c) than said cylinder head surrounding combustion chamber surface (5a).

14. A two-stroke internal combustion engine as claimed in at least one of the preceding claims 1 to 13, **characterized in that** said insert piece (21) is arranged within said cylinder head (5) such that the surface of said insert piece (21) opposite said prechamber (22) completely faces said cylinder bore (2c) but adjacent an inner wall of said cylinder bore (2c).

## Patentansprüche

1. Zweitaktbrennkraftmaschine mit einem Zylinderblock (2), der zumindest eine Zylinderbohrung (2c) aufweist, die zumindest einen Auslaßkanal (18) und zumindest eine Spülöffnung (18f) dem Auslaßkanal (18) gegenüberliegend für jeden Zylinder aufhält, der durch den oberen Bereich des Zylinderblocks (2) ausgebildet ist, einem Zylinderkopf (5) mit einem ersten Bereich, der eine Dichtoberfläche aufweist, die dazu ausgelegt ist, den zugeordneten Zylinderblock (2) um die Zylinderbohrung (2c) abdichtend zu ergreifen, um zumindest zum Teil eine Brennkammer (8) auszubilden, die von einer Brennkammer-Oberfläche (5a) des Zylinderkopfs festgelegt ist, welche von dieser Abdichtoberfläche umgeben ist, wobei diese Brennkammer-Oberfläche (5a) des Zylinderkopfs (5) mit einer Aussparung ausgebildet ist, ein Einführungsstück (21) zumindest teilweise innerhalb dieser Aussparung enthalten und an diesem Zylinderkopf (5) befestigt ist und wobei dieses Einführungsstück (21) zumindest zum Teil eine Vorkammer (22) ausbildet, und mit Mitteln, die einen Kehlenabschnitt (21b) bilden, der diese Vorkammer (22) mit dieser Brennkammer (8) verbindet, **dadurch gekennzeichnet**, daß Wärmeisolationseinrichtungen (a1, a2) vorgesehen sind zur Isolation dieses Einführungsstückes (21) gegenüber diesem ersten Bereich des Zylinderkopfes, um eine Wärmeübertragung zwischen diesen zu reduzieren, und daß dieses Einführungsstück (21) in Richtung auf die Seite der Zylinderbohrung (2c) von der entgegengesetzten Spülöffnung (18f) weg und oberhalb des Auslaßkanals (18) versetzt angeordnet ist, wenn entlang einer zur Zylinderachse parallelen Linie geschaut wird.

2. Zweitaktbrennkraftmaschine nach Anspruch 1, worin der erste Bereich des Zylinderkopfes und das Einführungsstück (21) aus verschiedenen Materialien ausgebildet sind.

3. Zweitaktbrennkraftmaschine nach Anspruch 2, worin der erste Bereich des Zylinderkopfes aus einem höher wärmeleitfähigen Material als das Einsatzstück (21) hergestellt und mit Mitteln zur Kühlung dieses ersten Bereiches des Zylinderkopfes versehen ist.

4. Zweitaktbrennkraftmaschine nach Anspruch 1, worin die Einrichtungen zur Isolation des Einführungsstückes (21) einen Luftspalt (a1, a2) umfassen, der zumindest zum Teil zwischen dem Einführungsstück (21) und dem ersten Bereich des Zylinderkopfes ausgebildet ist.

5. Zweitaktbrennkraftmaschine nach Anspruch 4, worin der Luftspalt (a1, a2) zwischen dem äußeren peripheren Bereich des Einführungsstückes (21) und zumindest dem Teil des ersten Bereiches des Zylindekopfes (5) ausgebildet ist, der die Aussparung festlegt.

6. Zweitaktbrennkraftmaschine nach Anspruch 4, worin der Luftspalt (a2) zwischen einer Basis des Einführungsstückes (21) der Brennkammer (8) entgegengesetzt und einer darauf zuweisenden Oberfläche des ersten Bereiches des Zylinderkofpes ausgebildet ist, der die Aussparung festlegt.

7. Zweitaktbrennkraftmaschine nach Anspruch 1, worin der Kehlenbereich (21b) in dem Einsatzstück (21) ausgeformt ist und sich durch eine Oberfläche des Einsatzstükkes (21) hindurch erstreckt, die zu einem Kolben (7) weist, der in der Zylinderbohrung (2c) gleitend aufgenommen ist und der zur Brennkammer (8) weist.

8. Zweitaktbrennkraftmaschine nach Anspruch 7, worin eine Oberfläche (21c) des Einsatzstückes (21), in welchem der Kehlenbereich (21b) ausgebildet ist, sich in engerer Annäherung an den Kolben (7) erstreckt, als die umgebende Oberfläche (5a) der Brennkammer des ersten Bereichs des Zylinderkopfes.

9. Zweitaktbrennkraftmaschine nach Anspruch 7, worin eine Oberfläche (21c) des Einsatzstückes (21), durch welches sich der Kehlenbereich (21b) erstreckt, in die Aussparung hinein derart ausgespart ist, daß die Oberfläche (21c) von dem Kolben (7) weiter beabstandet ist als die umgebende Oberfläche (5a) der Brennkammer des ersten Bereichs des Zylinderkopfes.

10. Zweitaktbrennkraftmaschine nach Anspruch 4, worin die Aussparung des ersten Bereiches des Zylinderkopfes eine zylinderförmige Aussparung ist und das Einsatzstück (21) eine äußere Randoberfläche aufweist, die zylindrisch ausgebildet ist, aber einen geringeren Durchmesser aufweist als der Durchmesser der Aussparung, wobei dieser zylinderförmige Bereich des Einsatzstückes (21) an einem Ende von einer ebenen Oberfläche begrenzt wird, in welcher eine Aussparung (21a) des Einsatzstückes ausgesbildet ist und welche zumindest zum Teil die Vorbrennkammer (22) bildet, und worin die Aussparung des Zylinderkopfes eine Oberfläche (20a) aufweist, die zu der äußeren Randoberfläche des Einsatzstückes (21) weist, aber von diesem beabstandet ist, und eine weitere Aussparung (20b) enthält, die mit der Aussparung (21a) des Einsatzstückes kooperiert, um die Vorbrennkammer (22) auszubilden, und worin Einrichtungen (23a; 48; 50; 51) vorhanden sind zur Befestigung des Einsatzstückes (21) an den Zylinderkopf (5) in einem davon beabstandeten Verhältnis.

11. Zweitaktbrennkraftmaschine nach Anspruch 4, worin die Aussparung in dem ersten Bereich des Zylinderkopfes eine gestufte zylinderförmige Aussparung (20a) ist, die einen Bereich größeren Durchmessers aufweist, der sich von der Oberfläche (5a) der Brennkammer aus erstreckt, und einen Bereich kleineren Durchmessers aufweist, der eine Schulter dazwischen bildet, und worin das Einsatzstück (21) eine erste äußere Randoberfläche aufweist, die zylinderförmig ausgebildet ist, aber einen geringeren Durchmesser aufweist als der Bereich geringeren Durchmessers der Aussparung, wobei der zylinderförmige Bereich des Einsatzstückes (21) an einem Ende von einer ebenen Oberfläche begrenzt wird, in welcher eine Aussparung (21a) des Einsatzstückes ausgebildet ist und welche zumindest zum Teil die Vorbrennkammer (22) bildet, und worin die Aussparung des Zylinderkopfes eine Oberfläche (20a) aufweist, die zur äußeren Randoberfläche des Einsatzstückes (21) weist, aber davon beabstandet ist, und eine weitere Aussparung (20b) aufweist, die mit der Aussparung (21a) des Einsatzstückes kooperiert, um die Vorbrennkammer (22) auszuformen, wobei dieses Einsatzstück (21) eine Schulter (21e) aufweist, die sich mit der Aussparungsschulter des Zylinderkopfes in Eingriff befindet, und worin Einrichtungen (48; 51) vorhanden sind zur Befestigung des Einsatzstückes (21) an den Zylinderkopf (5).

12. Zweitaktbrennkraftmaschine nach Anspruch 11, worin die Einrichtungen zur Befestigung des Einsatzstückes (21) an den Zylinderkopf (5) mit einem davon beabstandeten Verhältnis einen Haltering (48) aufweisen, der in dem Bereich mit dem größeren Durchmesser der Aussparung des Zylinderkopfes aufgenommen ist.

13. Zweitaktbrennkraftmaschine nach zumindest einem der vorstehenden Ansprüche 1 bis 12, **dadurch gekennzeichnet**, daß der Kehlenbereich (21b) ausgehend von dieser Vorkammer (22) sich durch eine Endoberfläche des Einsatzstückes (21) erstreckt, um diese Vorkammer (22) mit dieser Brennkammer (8) zu verbinden, wobei diese Endoberfläche dieses Einsatzstückes (21) von der angrenzenden umgebenden Oberfläche der Brennkammeroberfläche des ersten Bereiches des Zylinderkopfes beabstandet ist, um mit einer unterschiedlichen Distanz (a; b) von einem Kopf (7a) eines zugeordneten Kolbens (7) in der Zylinderbohrung (2c) positioniert zu sein, als diese umgebende Brennkammeroberfläche (5a) des Zylinderkopfes.

14. Zweitaktbrennkraftmaschine nach zumindest einem der vorstehenden Ansprüche 1 bis 13, **dadurch gekennzeichnet**, daß das Einführungsstück (21) innerhalb dieses Zylinderkopfes (5) derart angeordnet ist, daß die Oberfläche des Einsatzstückes (21), die dieser Vorkammer (22) entgegengesetzt angeordnet ist, vollständig zu dieser Zylinderbohrung (2c) weist, aber an einer inneren Wandung dieser Zylinderbohrung (2c) angrenzt.

## Revendications

1. Un moteur à combustion interne du type à deux temps comprenant un bloc-cylindres (2) ayant au moins un alésage de cylindre (2c) ayant au moins un passage d'échappement (18) et au moins un orifice de balayage (18f) opposé au passage d'échappement (18) pour chaque cylindre formé dans la partie supérieure du bloc-cylindres (2), une culasse (5) comprenant une première partie ayant une surface d'étanchéité adaptée pour venir en contact de façon étanche avec le bloc-cylindres (2) associé autour de l'alésage de cylindre (2c) pour former au moins en partie une chambre de combustion (8) définie par une surface de chambre de combustion de culasse (5a) entourée par ladite surface d'étanchéité, ladite surface de chambre de combustion (5a) de ladite culasse (5) étant dotée d'une cavité, un élément d'insert (21) logé au moins en partie à l'intérieur de ladite cavité et fixé sur ladite culasse (5), ledit élément d'insert (21) formant au moins en partie une préchambre (22), et des moyens définissant une partie de gorge (21b), faisant communiquer ladite préchambre (22) avec ladite chambre de combustion (8), caractérisé en ce que les moyens d'isolation thermique (a1, a2) sont prévus pour isoler ledit élément d'insert (21) vis-à-vis de ladite première partie de culasse dans le but de réduire le transfert thermique entre eux, et en ce que ledit élément d'insert (21) est situé décalé vers le coté de l'alésage de cylindre (2c) écarté de l'orifice de balayage (18f) opposé et au-dessus du passage d'échappement (18) lorsqu'on observe suivant une ligne parallèle à l'axe du cylindre.

2. Un moteur à combustion interne à deux temps selon la revendication 1, dans la lequel la première partie de culasse et l'élément d'insert (21) sont constitués de matériaux différents.

3. Un moteur à combustion interne à deux temps selon la revendication 2, dans lequel la première partie de culasse est constituée d'un matériau beaucoup plus conducteur de la chaleur que l'élément d'insert (21) et est dotée de moyens destinés à refroidir ladite première partie de culasse.

4. Un moteur à combustion interne à deux temps selon la revendication 1, dans lequel les moyens d'isolement de l'élément d'insert (21) comprennent un intervalle d'air (a1, a2) formé au moins en partie entre l'élément d'insert (21) et la première partie de culasse.

5. Un moteur à combustion interne à deux temps selon la revendication 4, dans lequel l'intervalle d'air (a1, a2) est formé entre la partie périphérique extérieure de l'élément d'insert (21) et au moins une partie de la première partie de la culasse (5) définissant la cavité.

6. Un moteur à combustion interne à deux temps selon la revendication 4, dans lequel l'intervalle d'air (a2) est formé entre une base de l'élément d'insert (21) opposé à la chambre de combustion (8) et une surface placé en regard de la première partie de culasse définissant la cavité.

7. Un moteur à combustion interne à deux temps selon la revendication 1, dans lequel la partie de gorge (21b) est formée dans l'élément d'insert (21) et s'étend dans une surface de l'élément d'insert (21) tourné vers un piston (7) logé de façon coulissante dans l'alésage de cylindre (2c) et tourné vers la chambre de combustion (8).

8. Un moteur à combustion interne à deux temps selon la revendication 7, dans lequel une surface (21c) de l'élément d'insert (21) dans lequel la partie de gorge (21b) est formée s'étend à proximité plus rapprochée vis-à-vis du piston (7) que la surface de chambre de combustion (5a) environnante de la première partie de culasse.

9. Un moteur à combustion interne à deux temps selon la revendication 7, dans lequel une surface (21c) de l'élément d'insert (21), par laquelle la partie de gorge (21b) s'étend, est creusée en formant la cavité, de manière que la surface (21c) soit plus espacée du piston (7) que la surface de chambre de combustion (5a) environnante de la première partie de culasse.

10. Un moteur à combustion interne à deux temps selon la revendication 4, dans lequel la cavité ménagée dans la première partie de culasse est une cavité cylindrique et l'élément d'insert (21) a une surface périphérique extérieure qui est cylindrique mais d'un diamètre inférieur au diamètre de la cavité, ladite partie cylindrique dudit élément d'insert (21) étant définie à une extrémité par une surface plane dans laquelle une cavité d'élément d'insert (21a) est formée et constituant au moins en partie la chambre de combustion (22) et dans lequel la cavité de culasse a une surface (20a), tournée vers et espacée vis-à-vis de ladite surface périphérique extérieure dudit élément d'insert (21), et ayant une autre cavité (20b) coopérant avec la cavité d'élément d'insert (21) pour former la chambre de précombustion (22), et des moyens (23a; 48; 50; 51) destinés à fixer l'élément d'insert (21) sur la culasse (5), en une relation espacée.

11. Un moteur à combustion interne à deux temps selon la revendication 4, dans lequel la cavité ménagée dans la première partie de culasse est une cavité cylindrique étagée (20a) constituée d'une partie à plus grand diamètre s'étendant depuis ladite surface de chambre de combustion (5a) et d'une partie à plus petit diamètre formant un épaulement entre elles, et l'élément d'insert (21) ayant une première surface périphérique extérieure cylindrique mais d'un diamètre inférieur à la valeur de la partie à plus petit diamètre de la cavité, ladite partie cylindrique dudit élément d'insert (21) étant définie à une extrémité par une surface plane dans laquelle une cavité d'élément d'insert (21a) est formée et constituant au moins en partie la chambre de précombustion (22) et dans lequel la cavité de culasse a une surface (20a) tournée vers mais espacée vis-à-vis de ladite surface périphérique extérieure dudit élément d'insert (21) et ayant une autre cavité (20b), coopérant avec la cavité d'élément d'insert (21a) pour former la chambre de précombustion (22), ledit élément d'insert (21) ayant un épaulement (21e) mis en prise avec ledit épaulement de cavité de culasse, et des moyens (48; 51) destinés à fixer l'élément d'insert (21) sur ladite culasse (5).

12. Un moteur à combustion interne à deux temps selon la revendication 11, dans lequel les moyens de fixation d'élément d'insert (21) sur la culasse (5) en une relation espacée comprennent un anneau de retenue (48) logé dans la partie à plus grand diamètre de la cavité de culasse.

13. Un moteur à combustion interne à deux temps selon au moins l'une des revendications 1 à 12 précédentes, caractérisé en ce que ladite partie de gorge (21b) s'étend depuis ladite préchambre (22) en traversant une surface d'extrémité dudit élément d'insert (21), pour établir la communication entre ladite préchambre (22) et ladite chambre de combustion (8), ladite surface d'extrémité dudit élément d'insert (21) étant espacée de ladite surface environnante adjacente de la surface de chambre de combustion de la première partie de culasse à positionner à une distance (a; b) différente vis-à-vis d'une tête (7a) d'un piston (7) associé dans l'alésage de cylindre (2c) par rapport à ladite culasse entourant la surface de chambre de combustion (5a).

14. Un moteur à combustion interne à deux temps selon au moins l'une des revendications 1 à 13 précédentes, caractérisé en ce que ledit élément d'insert (21) est agencé à l'intérieur de ladite culasse (5) de manière que la surface dudit élément d'insert (21) opposée à ladite préchambre (22) soit complètement tournée vers ledit alésage de cylindre (2c) mais adjacente à une paroi intérieur dudit alésage de cylindre (2c).
